# FASCICULE DE BREVET EUROPEEN

(11) **EP 1 854 387 B1**
(45) Date de publication et mention de la délivrance du brevet: **12.02.2014**
(21) Numéro de dépôt: 07356062.5
(22) Date de dépôt: 03.05.2007
(51) Int. Cl.: A47J 31/60

(54) **Distributeur automatique de boissons infusees**
Getränkeautomat für aufgegossene Getränke
Automatic brewed beverage dispenser

(30) Priorité: 09.05.2006 FR 0604088
(43) Date de publication de la demande: 14.11.2007
(73) Titulaire: SEB S.A., 69130 Ecully (FR)
(72) Inventeur: Morin, Gilles, 14210 Sainte Honorine du Fay (FR); Mih, Séverine, 53100 Mayenne (FR); Dutertre, Thierry, 61000 Saint Germain du Corbeis (FR)
(74) Mandataire: Kiehl, Hubert

(56) Documents cités:
- EP-A- 1 654 968
- FR-A1- 2 713 906

## Description

La présente invention est relative à un appareil du type distributeur automatique de boissons infusées à partir d'un dispositif distributeur de produit alimentaire pulvérulent d'infusion ou de percolation, tels le café moulu, le thé, le chocolat, etc.

Un appareil de préparation et distribution de boissons chaudes comprend généralement un réservoir d'eau froide, une pompe électrique, une chaudière et une tête d'infusion apte à recevoir le produit pulvérulent en vue de lui injecter l'eau chaude en provenance de la chaudière, la boisson obtenue étant ensuite orientée vers un récipient collecteur. En fin de cycle d'infusion, la tête d'infusion doit être ouverte afin de pouvoir y introduire une nouvelle dose de produit d'infusion après avoir évacué le reste de produit précédemment infusé.

Un tel appareil est décrit dans le document WO99/12457 et concerne un appareil apte à distribuer de manière automatique du café espresso à partir de poudre de café. L'appareil comprend un groupe d'infusion comportant une chambre d'infusion à axe vertical apte à recevoir un piston presseur coulissant selon ledit axe vertical actionné par le piston d'un vérin hydraulique. Le piston du vérin hydraulique est relié au piston presseur et peut passer d'une position de repos à une position de travail dans laquelle le piston presseur est en compression dans la chambre d'infusion sous l'effet du liquide sous pression. Le passage à la position de repos se fait par un ressort de rappel.

Cet appareil comprend par ailleurs un distributeur automatique de mouture comportant un réservoir contenant la mouture, muni d'un orifice de distribution, une goulotte conduisant la mouture vers la chambre d'infusion, ainsi qu'un moyeu relié à un arbre qui met en rotation les pales du moyeu pour pousser une certaine quantité de mouture dans ladite goulotte via l'orifice de distribution lors de l'entraînement dudit arbre. Un tel distributeur automatique de mouture est décrit dans le document FR 2 713 906.

En fonctionnement sur une machine à café automatique, on a quand même constaté des bourrages de café présents dans la goulotte conduisant la mouture du distributeur vers la chambre d'infusion. En effet, après la réalisation de quelques cafés successifs, la chambre d'infusion dégage de l'humidité sous forme de vapeur. La goulotte de descente de café étant située dans la proximité de la chambre d'infusion, la vapeur que la chambre dégage vient se condenser sur les parois de la goulotte, ces parois humides favorisant alors l'accrochage de la poudre de café. Le café s'accumule ainsi sur les parois de la goulotte du distributeur de mouture ce qui fait que, après quelques cycles de café, un bourrage de café peut se constituer entre celle-ci et la chambre d'infusion, bourrage qui est d'autant plus important que la mouture est fine.

On connaît des dispositifs de nettoyage manuels de la goulotte de descente du café, par exemple à l'aide d'un pinceau, mais ces dispositifs nécessitent l'intervention de l'utilisateur.

Par ailleurs, le document EP 1 654 968 décrit une machine à café automatique comportant un dispositif de nettoyage automatique de la goulotte de descente d'un distributeur de mouture de café. Cette machine comporte un groupe d'infusion comprenant une chambre d'infusion montée fixe au dessus d'un bloc thermique assurant l'alimentation en eau chaude de la chambre. La chambre d'infusion reçoit un piston presseur coulissant verticalement à l'intérieur de la chambre pour compacter la mouture. L'actionnement du piston presseur est fait par un vérin hydraulique. La machine comprend également un distributeur de mouture de café muni d'une goulotte de transfert du café moulu vers la chambre d'infusion, goulotte qui est nettoyée par un dispositif de nettoyage solidaire du piston presseur. Ce dispositif de nettoyage comprend dans ce but un racloir rigide coopérant avec une goulotte pivotante, voire un balai flexible venant en contact avec la paroi interne de la goulotte, le racloir ou le balai étant donc entraîné en mouvement par le piston presseur. Fonctionnant à satisfaction, le mouvement du racloir ou du balai est toutefois limité à celui du piston, qui s'effectue une fois par cycle d'infusion dans le sens de la longueur de la goulotte. De surcroît, les particules de poudre de café raclées après la fermeture de la chambre par le piston, s'accumulent sur le piston ou autour de la chambre d'infusion, ce qui nécessite un nettoyage systématique de l'intérieur de la machine.

Le but de la présente invention est de remédier aux inconvénients précités et de proposer un distributeur automatique de boissons infusées comportant un distributeur de produit pulvérulent apte à éviter, automatiquement et de manière efficace, le bourrage de produit à infuser dans la goulotte le conduisant à la chambre d'infusion.

Un autre but de l'invention est un distributeur automatique de boissons infusées apte à préparer une boisson de qualité, au goût frais, tout en étant sûr et fiable en fonctionnement.

Un autre but de l'invention est un distributeur automatique de boissons infusées comportant un dispositif de nettoyage automatique de la goulotte de descente de café qui agit simultanément au passage du café dans la goulotte.

Un autre but de l'invention est un distributeur automatique de boissons infusées comportant un dispositif de nettoyage automatique de la goulotte de descente de café pouvant être réalisé de manière économique, tout en étant dissocié du groupe d'infusion.

Ces buts sont atteints avec un distributeur automatique de boissons infusées à partir de produit pulvérulent comprenant:
- une chambre d'infusion,
- un dispositif distributeur de produit pulvérulent comportant un orifice de distribution communiquant avec une goulotte apte à canaliser ledit produit vers la chambre d'infusion,
- un dispositif de nettoyage automatique de la goulotte,
du fait que le dispositif de nettoyage automatique comprend un bras d'essuyage disposé à l'intérieur de la goulotte et actionné par un mécanisme à entraînement électrique.

Le distributeur de produit pulvérulent peut être du type comportant un réservoir qui contient le produit à infuser et à l'intérieur duquel se trouve un moyeu à pales apte à passer une certaine quantité de produit, au travers d'un orifice de distribution, dans une goulotte qui l'achemine en proximité de la chambre d'infusion. Un tel distributeur peut également être un broyeur de grains de café qui envoie directement, au travers d'un orifice de distribution, ou par l'intermédiaire d'une chambre tampon, une certaine quantité de café dans une goulotte qui la transfère dans la chambre d'infusion. Une telle goulotte est un conduit tubulaire, ouvert ou fermé, qui est disposé généralement vertical ou incliné par rapport à la chambre d'infusion, de manière à ce que le produit pulvérulent tombe par gravité à l'intérieur de la chambre d'infusion.

Plus particulièrement selon l'invention, la goulotte du distributeur est nettoyée automatiquement par un bras d'essuyage d'un dispositif de nettoyage automatique mis en mouvement par un moteur électrique. Un tel mécanisme comprend alors un agencement d'éléments capables de transformer l'énergie mécanique reçue, à l'entrée, de l'arbre moteur en un mouvement du bras d'essuyage à l'intérieur de la goulotte, en sortie.

Cette solution présente l'avantage de fonctionner automatiquement et indépendamment des autres composants de l'appareil, en effectuant une simple commande d'alimentation du moteur électrique actionnant le bras d'essuyage. Cette commande peut être effectuée manuellement par l'utilisateur avant ou après avoir commandé un cycle d'infusion ou elle peut être préprogrammée dans le circuit logique du distributeur, circuit appartenant à une carte électronique de gestion du fonctionnement de l'appareil.

Ainsi, de par son fonctionnement automatique et indépendant, les paramètres de fonctionnement du mouvement du bras d'essuyage peuvent facilement être réglés ou choisis par l'utilisateur, par exemple en fonction de la quantité de produit distribué, de la finesse de la mouture, etc.

Ledit mécanisme comprend un moteur électrique et un dispositif d'entraînement apte à transformer le mouvement rotatif de l'arbre de sortie du moteur en un mouvement alternatif du bras d'essuyage.

On aurait pu utiliser, par exemple, une roue à aubes entraînée en rotation par un moteur, chaque aube constituant alors un bras d'essuyage amené successivement lors de la rotation de la roue en contact avec la paroi de fond de la goulotte. On préfère toutefois un dispositif d'entraînement, par exemple du type bielle manivelle, permettant de transformer le mouvement rotatif de l'axe du moteur en un mouvement rectiligne alternatif du bras d'essuyage car on peut obtenir, avec un dispositif de structure simplifiée, un mouvement plus ample de balayage des parois de la goulotte.

Ledit moteur électrique appartient au dispositif distributeur de produit pulvérulent.

Ainsi, le fait d'utiliser un même moteur pour entraîner à la fois le distributeur de produit pulvérulent et le dispositif de nettoyage de la goulotte s'avère une solution très économique et de moindre encombrement permettant de construire un distributeur de boissons compact et de structure simplifiée. De surcroît, en faisant fonctionner le dispositif de nettoyage de la goulotte en même temps que le dispositif distributeur de produit pulvérulent, ceci permet d'éviter les bourrages dans la goulotte lors du passage du produit distribué vers la chambre d'infusion et, en même temps, de maintenir la goulotte toujours propre, tout en utilisant une solution simple, fiable et peu coûteuse.

De préférence, le dispositif d'entraînement comprend une came entraînée en rotation par le moteur électrique via un train d'engrenages.

On aurait pu utiliser d'autres dispositifs d'entraînement du bras d'essuyage tels que, par exemple, un mécanisme utilisant un entraînement en rotation d'un excentrique solidaire de l'axe rotatif amené à coulisser dans une fente d'un secteur circulaire denté articulé coopérant, lui, avec un pignon d'entraînement en pivotement du bras d'essuyage. On préfère toutefois, pour des raisons de simplicité constructive, utiliser une came rotative dont le contour permet de transformer le mouvement de rotation du moteur en un mouvement oscillant du bras d'essuyage, le train d'engrenages permettant alors de réduire la vitesse de rotation, tout en assurant un bon couple de transmission des forces à la came et donc au bras d'essuyage. De préférence, le moto-réducteur sert également, comme le moteur électrique, à l'entraînement du dispositif distributeur de produit pulvérulent, par exemple pour la mise en rotation des meules d'un broyeur ou des pales d'un doseur de mouture.

Avantageusement, la came entraîne le bras d'essuyage en un mouvement alternatif au contact d'au moins une paroi de la goulotte.

Le bras d'essuyage est donc amené à effectuer un mouvement oscillant au contact de la paroi de la goulotte, agissant donc sur cette paroi comme un essuie-glace pour enlever les particules de produit pulvérulent ayant tendance à adhérer à la goulotte.

De préférence, le bras d'essuyage effectue au moins un aller-retour, de préférence trois allers-retours, durant la période de distribution de produit pulvérulent.

Il a été constaté, lors des tests réalisés en laboratoire, qu'on obtient un nettoyage efficace de la goulotte en effectuant un aller-retour du bras d'essuyage vers la fin de la période de distribution de produit pulvérulent ou encore mieux en répartissant trois allers-retours sur la durée de cette période pour éviter les bourrages de produit lors de son passage dans la goulotte.

Avantageusement, la came tourne autour d'un axe vertical.

Ceci permet un agencement vertical, éventuellement en parallèle, du moteur électrique, du moto-réducteur et du dispositif distributeur pour un plus faible encombrement de la machine.

De préférence, la came actionne un interrupteur de commande du dispositif distributeur de produit pulvérulent.

Le profil de la came peut ainsi actionner un interrupteur de commande du démarrage et/ou de l'arrêt des meules d'un broyeur de grains de café ou des pales de dosage d'un réservoir de café moulu après un certain nombre de rotations de la came ou une fraction d'un tour de rotation de cette dernière.

Dans un mode préféré de réalisation de l'invention, ledit dispositif distributeur comprend un réservoir de café moulu à doseur muni de pales, et la came comporte des moyens d'entraînement en rotation des pales du doseur. Dans un autre mode de réalisation de l'invention, le dispositif distributeur comprend un broyeur de grains de café, la came comportant des moyens d'entraînement en rotation de l'une des meules du broyeur.

Avantageusement, le bras d'essuyage est fixé à un curseur guidé en translation dans un plan perpendiculaire à l'axe de rotation de la came.

Dans une variante, le bras d'essuyage est monté pivotant autour d'une articulation située dans le voisinage de la goulotte, l'une des extrémités du bras d'essuyage venant alors au contact de la came rotative lui imprimant alors le mouvement de pivotement à l'intérieur de la goulotte.
On préfère toutefois imprimer au bras d'essuyage un mouvement de translation alternative en utilisant un curseur guidé en translation au contact du profil de la came rotative, ce mouvement assurant un meilleur balayage de la surface parcourue par le bras d'essuyage.

De préférence, ledit curseur est monté dans un logement moyennant un ressort de rappel, la force du ressort étant contraire à celle imprimée au curseur par la came.

Ceci constitue une solution simplifiée du mécanisme d'actionnement du bras d'essuyage, les protubérances radiales de la came imprimant le mouvement aller au curseur, le mouvement retour du curseur étant assuré par un ressort de rappel.

Avantageusement, la goulotte est inclinée par rapport au plan du curseur et le bras d'essuyage suit l'inclinaison de la goulotte.

Une goulotte inclinée forme un tremplin de déversement du café moulu, orientant le café en direction de la chambre d'infusion; pour une action efficace, le bras d'essuyage a alors une même inclinaison que la goulotte et plus particulièrement avec la paroi de cette dernière sur laquelle le bras d'essuyage est susceptible de venir en contact.

De préférence, le bras d'essuyage effectue un mouvement de translation dans le sens de la largeur de la goulotte.

Dans une variante, on aurait pu envisager un balayage de nettoyage dans le sens de la longueur de la goulotte ou de la descente du café. On a toutefois constaté qu'il était plus avantageux de réaliser un balayage dans le sens de la largeur, celui-ci nécessitant d'imprimer une amplitude moindre au bras d'essuyage.

Avantageusement, le bras d'essuyage est disposé près de l'orifice de distribution et l'amplitude du mouvement effectué par le bras d'essuyage est sensiblement égale à la largeur de l'orifice de distribution.

L'orifice de distribution débouchant directement dans la goulotte et le bras d'essuyage étant disposé à l'entrée, cette solution permet alors un nettoyage efficace de la zone de mise en contact de la goulotte avec le produit pulvérulent assurant par la suite un bon écoulement de ce dernier.

De préférence, ledit bras d'essuyage est réalisé en un fil d'acier inoxydable.

Un tel fil, notamment d'un diamètre inférieur à 3 mm, peut avantageusement être utilisé pour nettoyer les particules de café moulu car ces dernières n'adhèrent pas au fil. Dans une variante, on pourrait envisager de déposer un revêtement du type Téflon^{®} sur un fil en acier ou encore le revêtir d'une matière plastique élastomère assurant alors un meilleur nettoyage des parois de la goulotte.

Avantageusement, ledit bras d'essuyage prend appui de manière élastique contre la paroi de la goulotte.

Cet appui élastique pourrait se faire par l'élasticité du bras d'essuyage lui-même et/ou en le montant à ressort au contact des parois de la goulotte afin de permettre au bras d'essuyage de mieux s'adapter au contour des parois de la goulotte.

Dans une variante avantageuse de réalisation de l'invention, le dispositif distributeur comprend un réservoir de produit pulvérulent monté amovible dans un support muni d'une ouverture de passage du produit pulvérulent vers la goulotte.

Le réservoir de produit pulvérulent étant monté de manière démontable ou amovible par rapport au châssis du distributeur, l'utilisateur peut alors le retirer facilement en vue de son nettoyage ou de son stockage dans un endroit frais et/ou le remplacer par un autre réservoir contenant un produit pulvérulent différent du premier.

Avantageusement, la paroi de fond du support comporte une fente d'évacuation de produit pulvérulent en direction de la goulotte.

Le support de réservoir amovible permet déjà de porter et guider le réservoir amovible par rapport au châssis du distributeur, ainsi que de recevoir en son fond les éventuels résidus de produit pulvérulent s'échappant du réservoir durant le fonctionnement. La fente d'évacuation de produit pulvérulent permet alors d'évacuer ces résidus vers la goulotte en dessous, le réservoir étant enlevé du support, et de garder ainsi un support propre et fonctionnel.

L'invention sera mieux comprise à l'étude d'un mode de réalisation pris à titre nullement limitatif et illustré dans les figures annexées dans lesquelles :
- la figure 1 est une vue en perspective d'un distributeur automatique de boissons infusées selon l'invention;
- la figure 2 est une vue en perspective d'un sous-ensemble constituant du distributeur de la figure 1 illustrant plus particulièrement le dispositif distributeur de produit pulvérulent, son support et la goulotte;
- la figure 3 est une vue en perspective du sous-ensemble de la figure 2, mais où le dispositif distributeur a été enlevé de son support pour rendre mieux visible d'autres composants, dont le dispositif de nettoyage de la goulotte;
- la figure 4 est une vue en perspective du dispositif de nettoyage de la goulotte ;
- la figure 5 est une vue en perspective du dispositif distributeur selon une variante de réalisation de l'invention ;
- la figure 6 est une vue de dessus légèrement en perspective d'un support de réservoir du dispositif distributeur de la figure 5.

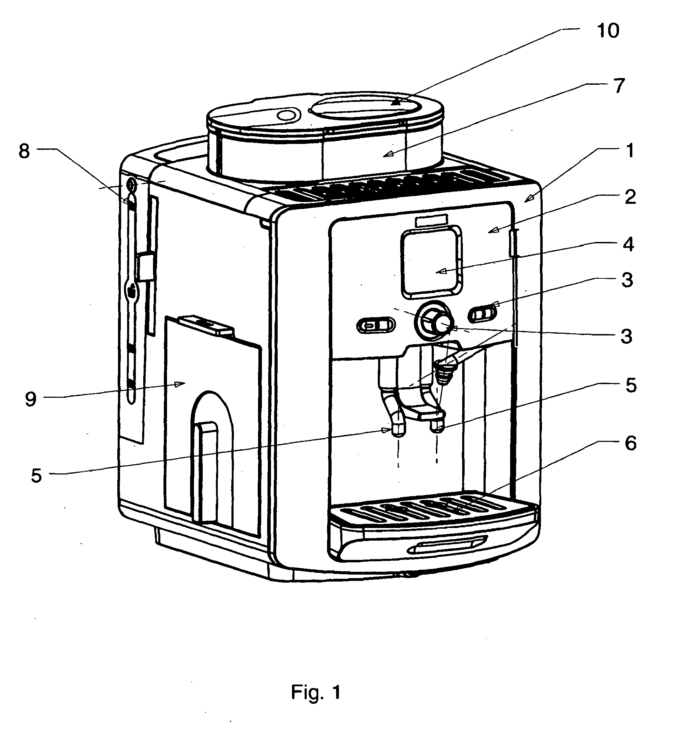

Le distributeur automatique de boissons infusées représenté à la figure 1 est une machine à café apte à confectionner un café espresso comprenant un boîtier 1 de forme générale parallélépipédique qui renferme les principaux éléments fonctionnels de la machine. Le boîtier 1 présente une façade comprenant un panneau de commande 2 constitué d'une série de boutons 3 agissant sur le circuit électronique de contrôle de la machine et d'un afficheur 4. La boisson confectionnée par la machine s'écoule par deux buses identiques de sortie 5 d'un bec verseur dans une tasse (non représentée) placée sur un support 6. La partie supérieure 7 du boîtier 1 renferme un distributeur de produit pulvérulent 10 comportant, dans l'exemple illustré et tel qu'il sera décrit par la suite, un réservoir de mouture de café. Un réservoir d'eau 8 est présent en la partie arrière du boîtier. Sur l'un des côtés latéraux du boîtier est agencé un bac 9 destiné à recevoir les galettes de mouture usagées en provenance de la chambre d'infusion de la machine.

A l'intérieur du boîtier 1 est disposé un groupe d'infusion comportant une chambre d'infusion en forme de cuve cylindrique apte à recevoir une certaine quantité de café moulu au-dessus d'une paroi inférieure formant filtre pour la mouture. La chambre d'infusion est montée fixe au-dessus d'un bloc thermique, d'axe vertical, dont elle constitue le prolongement. Le bloc thermique renferme un circuit d'eau et un élément chauffant électrique et assure l'alimentation en eau chaude de la chambre d'infusion. La chambre d'infusion reçoit par ailleurs un piston presseur qui coulisse verticalement et de manière étanche dans la chambre pour compacter la mouture. Les éléments constitutifs du groupe d'infusion ne sont pas représentés sur les dessins, mais peuvent être réalisés selon la description du document WO 99/12456. Le piston presseur est actionné par un vérin hydraulique dans son mouvement de coulissement par rapport à la chambre, les détails de construction du vérin hydraulique et des moyens d'actionnement du piston presseur sont mieux décrits dans le document WO 99/12457. L'eau chaude en provenance du bloc thermique est envoyée à travers la mouture dans la chambre d'infusion et la boisson infusée est ensuite évacuée au travers du piston presseur, via un canal interne de ce dernier prolongé par un conduit d'écoulement vers les buses de sortie 5.

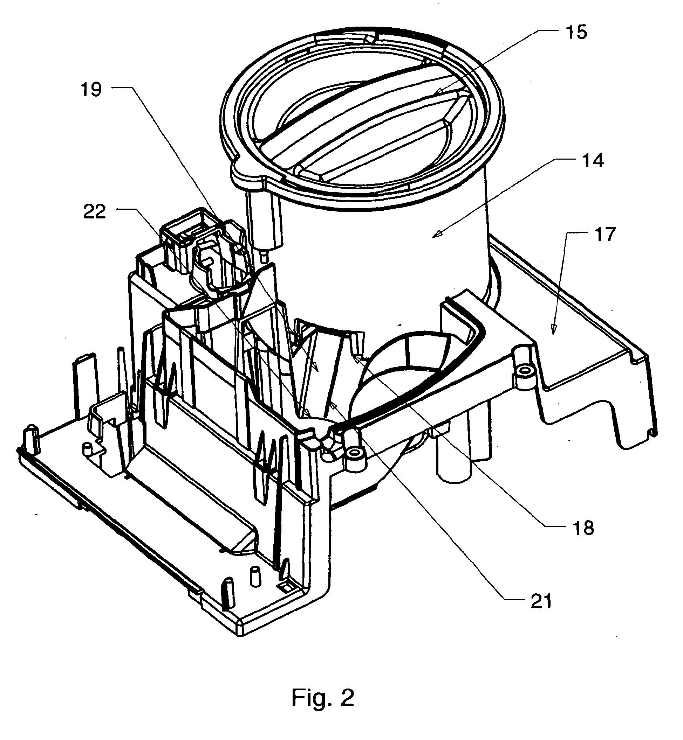

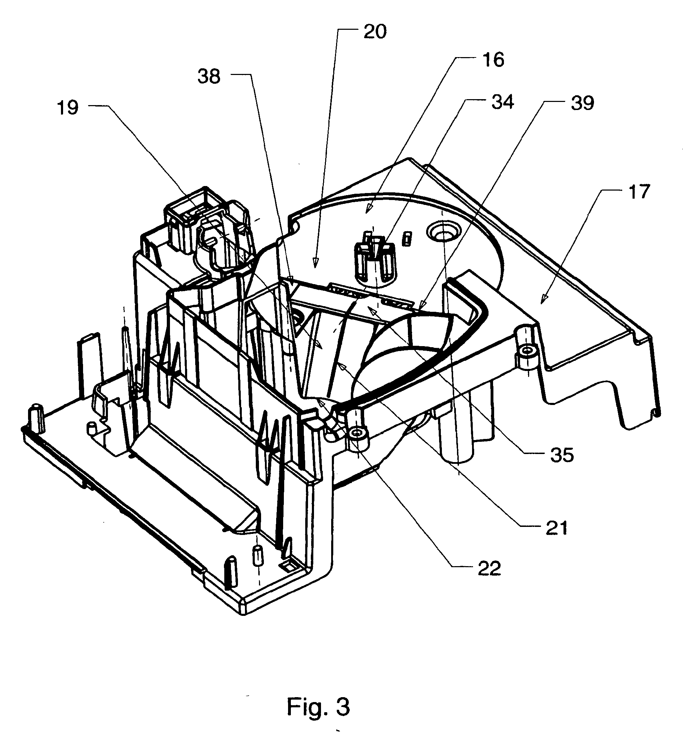

L'appareil comprend par ailleurs le distributeur de produit pulvérulent 10 qui comprend, dans l'exemple représenté et tel que mieux visible à la figure 2, un réservoir 14 de café moulu, de forme générale cylindrique fermé par un couvercle amovible 15 et monté dans un siège 17 situé à l'intérieur du boîtier 1 de l'appareil et soutenu par l'ossature interne de la machine. Le réservoir 14 peut être monté de manière amovible dans une assise 16 (figure 3) du siège 17, par exemple par une fixation à baïonnette. Le réservoir 14 comprend dans son fond une pluralité de pales radiales rotatives, par exemple quatre pales, réparties le long d'un corps cylindrique creux entraîné en rotation autour de l'axe vertical du réservoir 14 par un moto-réducteur pour transférer la mouture vers la chambre d'infusion, via un orifice de distribution 18, situé en partie inférieure du réservoir 14, et une goulotte 19, tel qu'il sera expliqué par la suite. Un tel réservoir de mouture peut par exemple être réalisé selon la description du document FR 2 713 906.

Tel que visible à la figure 2, la goulotte 19 a une forme de canal demi-cylindrique, incliné par rapport à la verticale, et débouchant en sa partie inférieure à faible distance (2-3cm) au-dessus de la chambre d'infusion de la machine, la partie supérieure de la goulotte étant agencée à la sortie du réservoir 14, juste en dessous de l'orifice 18 de distribution de ce dernier. La goulotte 19 peut être réalisée en une matière plastique, avantageusement en une même pièce avec le siège 17.

Selon l'invention, la machine comporte un dispositif de nettoyage automatique 20 (fig.3) de la goulotte 19 de descente de café en direction de la chambre d'infusion, ce dispositif comportant un bras d'essuyage 21 amené à balayer la paroi 22 demi-cylindrique de la goulotte 19 lorsqu'il est mis en mouvement par un dispositif d'entraînement 25 recevant le mouvement d'entrée d'un moto-réducteur 24.

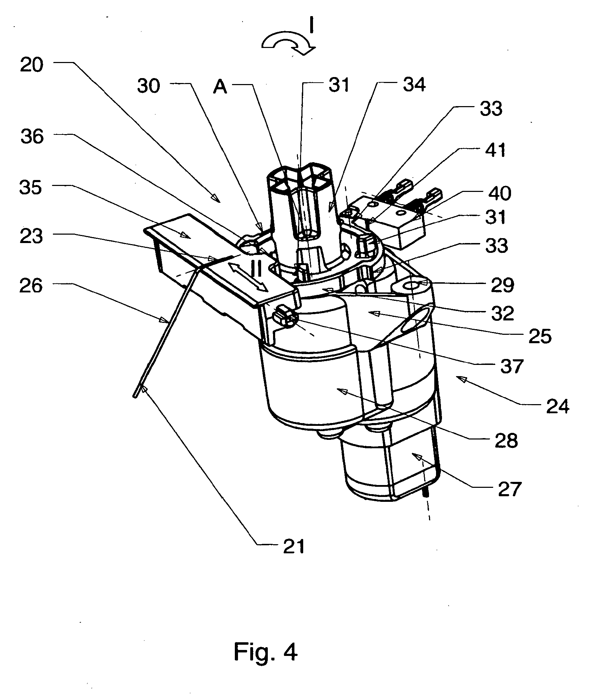

Tel que mieux visible à la figure 4, le dispositif d'entraînement 25 reçoit à l'entrée un mouvement de rotation autour d'un axe vertical A, tel qu'indiqué par la flèche I. Le mouvement de rotation est produit par l'arbre vertical de sortie d'un moteur 27, sa vitesse étant réduite par un train d'engrenages 28 dont la sortie est couplée à l'entrée du dispositif 25. Le dispositif d'entraînement 25 comprend une came rotative 30 comportant des nervures protubérantes verticales 31 venant, lors de leur entraînement en rotation autour de l'axe A, au contact du bossage 36 d'un curseur 35, tel qu'il sera expliqué par la suite.

Le corps du moto-réducteur 24 est monté en la partie inférieure du siège 17 de la machine par des vis de fixation passant à travers des oreilles de fixation 29. La came 30 comporte une partie en forme de disque 32 supportant les nervures 31 protubérantes, à partir de la base horizontale du disque 32. La partie en forme de disque 32 est prolongée verticalement vers le haut par un moyeu 34. Tel que visible à la figure 3, le moyeu 34 de la came 30 est protubérant par rapport au siège 17 et il passe à travers un orifice situé au centre de l'assise 16 pour arriver au centre du réservoir 14 lorsque ce dernier est monté sur le siège 17. Le moyeu 34 en forme de croix vient en prise avec les pales de dosage situées à l'intérieur du réservoir 14 et assure leur entraînement en rotation lors de l'alimentation du moto-réducteur 24.

Par ailleurs, la périphérie de la partie en forme de disque 32 de la came 30 (figure 4) a une forme de roue à rochet en étant munie de quatre protubérances radiales 33. Un interrupteur 40 est placé à proximité de la périphérie de la came de telle sorte que chaque protubérance radiale 33 actionne le contact 41 de l'interrupteur 40 lors de la rotation de la came 30. L'interrupteur 40 est relié à un circuit électronique de comptage du nombre de passages des protubérances 33 et donc de quarts de tours effectués par la came 30, circuit qui commande ensuite l'arrêt de la came et donc du moto-réducteur 24. La quantité de mouture de café délivrée par le dispositif distributeur 10 est donc gérée par la même came 30, le nombre de passages des protubérances radiales 33 déterminant la quantité de café moulu transféré vers la goulotte 19. Les nervures 31 de la came 30 sont disposées dans la proximité des protubérances radiales 33, mais légèrement décalées en arrière dans le sens de rotation de la came de manière à ce qu'un cycle de nettoyage ne commence pas immédiatement après l'arrêt du moto-réducteur.

Les nervures 31 de la came 30 ont une forme de prisme droit, leur face d'attaque venant au contact du bossage 36 du curseur 35 étant en biais. Le curseur 35 a une forme générale parallélépipédique et est monté avec jeu dans un logement creux 38 (mieux visible à la figure 3) de forme correspondante, pratiqué dans le siège 17. A l'une des extrémités du curseur 35 est monté un ressort de rappel (non visible sur les dessins) fixé plus particulièrement au niveau de son ergot 37, l'autre extrémité du ressort venant en butée à l'intérieur du logement 38. A l'inverse, le ressort pourrait être monté à l'extrémité opposée de l'ergot 37, celui-ci faisant alors office de butée. Le curseur 35 est agencé dans le logement 38 de manière à pouvoir coulisser dans la direction de la flèche II de la figure 4, les parois latérales 39 (figure 3) du logement 38 formant des rails de guidage dans le mouvement de coulissement du curseur 35. L'extrémité du curseur 35 opposée à celle comportant l'ergot 37 peut également présenter une butée élastique réalisée par exemple en une matière élastomère.

Tel que mieux visible à la figure 4, le curseur 35 porte le bras d'essuyage 21 fixé avec sa base 23 horizontale au centre de la face supérieure horizontale du curseur 35. Le bras d'essuyage 21 comporte, dans le prolongement de sa base 23, une partie active 26 ayant une longueur comparable, voire légèrement inférieure, à celle de la goulotte 19. La partie active 26 du bras 21 est inclinée par rapport à la base 23 du bras selon un angle égal à celui d'inclinaison de la goulotte 19. Le bras d'essuyage 21 est réalisé à base d'un fil en acier inoxydable et est fixé dans le curseur 35 de manière à ce que sa partie active 26 vienne en contact avec la paroi demi-cylindrique 22 de la goulotte 19. De par l'élasticité du fil en acier et de son montage au contact de la goulotte, la partie active 26 du bras d'essuyage 21 vient en appui élastique contre la goulotte 19.

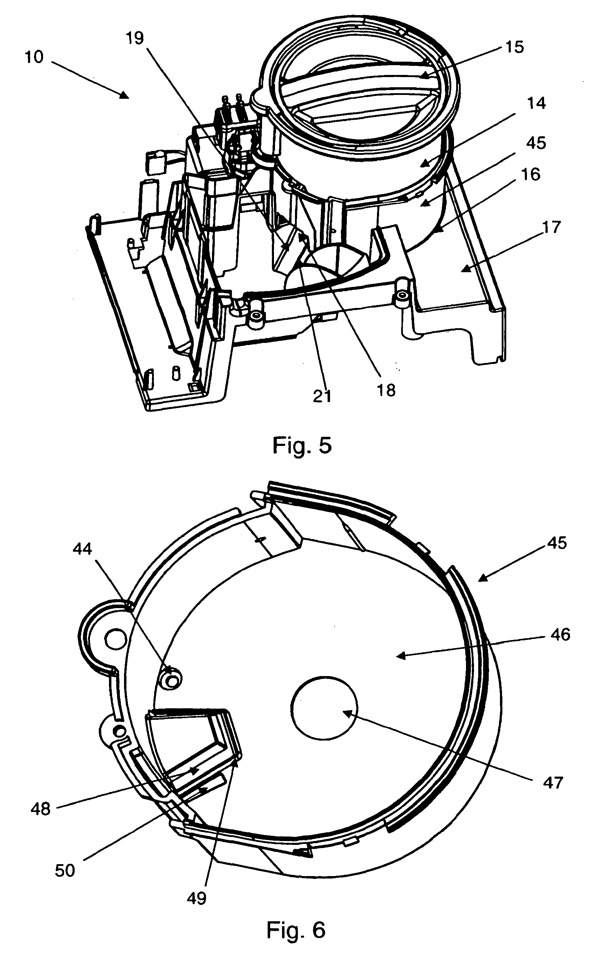

Les figures 5 et 6 illustrent une variante de réalisation du dispositif distributeur de produit pulvérulent 10 de l'invention où le réservoir 14 de café moulu est monté amovible dans le siège 17 à l'intérieur du boîtier 1 de l'appareil moyennant un support 45. Le support 45 est une pièce de forme générale cylindrique ouverte vers le haut, comportant en la partie centrale de sa paroi de fond 46 un orifice 47 circulaire traversé par le moyeu 34. Le support 45 est monté avec sa base dans l'assise 16 du siège 17 moyennant une vis de fixation (non représentée sur les dessins) passant par un orifice 44 de la paroi de fond 46. La paroi de fond 46 présente également une ouverture 48 coopérant avec l'orifice de distribution 18 du réservoir 14. L'ouverture 48 présente une forme trapézoïdale évasée vers la périphérie du support 45, forme similaire à celle de l'orifice de distribution 18, ainsi que des dimensions proches de celles du même orifice. La périphérie de l'ouverture 48 présente un rebord 49 surélevé par rapport à la surface de la paroi de fond 46.

De manière avantageuse selon cette réalisation, le support 45 présente une fente 50 d'évacuation de mouture adjacente au bord 49 de l'ouverture 48 et située au niveau de la paroi de fond 46. Cette fente 50 est pratiquée dans la paroi de fond 46, a une forme allongée légèrement évasée vers le centre du support 45 pour augmenter la surface de passage tout en suivant, sur un côté, l'inclinaison de l'ouverture 48. La fente 50 communique avec la goulotte 19 en dessous, la largeur de cette dernière étant supérieure à celle de l'ouverture 48 et de la fente 50 adjacente. La fente 50 sert à évacuer la mouture résiduelle qui peut s'échapper du réservoir 14 et tomber à l'intérieur du support 45. La mouture est balayée par l'utilisateur en utilisant un pinceau (non représenté, pouvant être fourni avec la machine) après avoir préalablement retiré le réservoir 14. Après balayage, la mouture retombe dans la goulotte 19 d'où elle peut être enlevée par le bras d'essuyage 21 lors de la mise en marche du distributeur, tel qu'il sera expliqué par la suite.

En fonctionnement, en actionnant l'un des boutons 3, l'utilisateur déclenche le départ d'un cycle d'infusion de café. Le cycle d'infusion commence par la distribution du café moulu depuis le réservoir 14 à travers la goulotte 19 dans la chambre d'infusion, l'actionnement du bouton de commande alimentant le moto-réducteur 24 qui met en rotation la came 30. Le moyeu 34 de la came 30 entraîne les pales de dosage à l'intérieur du réservoir 14 pour pousser la mouture de café à travers l'orifice de distribution 18. Lors de sa rotation, la came 30 anime en un mouvement de translation alternative le curseur 35, notamment lorsque ses quatre nervures 31 viennent successivement au contact du bossage 36 du curseur 35. En effet, une nervure 31 permet de pousser le curseur 35 à l'encontre de son ressort de rappel (qui peut être de compression ou de traction selon son agencement par rapport au curseur), ce dernier prenant sa position neutre dès que la nervure 31 n'est plus au contact du bossage 36 pour déplacer ainsi le curseur dans le sens contraire.

La course ou amplitude de mouvement du curseur 35 correspond à la largeur de l'orifice de distribution 18 qui est, elle, égale à la largeur de la goulotte 19, de manière à ce que le bras d'essuyage 21 puisse balayer toute la largeur de la goulotte 19. Ainsi, en position neutre ou de repos, le bras d'essuyage 21 porté par le curseur 35 est poussé par le ressort de rappel de ce dernier latéralement contre la paroi de la goulotte 19. Lors de la rotation de la came 30, la nervure 31 de cette dernière pousse le bossage 36 du curseur 35 dans la direction opposée, le bras d'essuyage 21 étant alors amené dans la position diamétralement opposée à l'intérieur de la goulotte 19 d'où il est ramené par le ressort dans sa position initiale. Dans l'exemple illustré, la came 30 comporte quatre nervures 31, ce qui permet quatre allers-retours du bras d'essuyage 21 par tour de rotation de la came 30.

De surcroît, en tournant, les protubérances radiales 33 de la came 30 actionnent un interrupteur 40 qui compte le nombre de quarts de tours effectués par la came 30 et donc par le moyeu 34 d'entraînement des pales de dosage du réservoir 14. A titre d'exemple, l'envoi d'une dose de café moulu à travers l'orifice de distribution 18 correspond à 3/4 d'un tour de rotation de la came ou à un tour complet de rotation de la came 30. Ceci permet alors au bras d'essuyage 21 d'effectuer trois ou quatre allers-retours de balayage de la goulotte lors de la distribution d'une dose de café en direction de la chambre d'infusion. Le moto-réducteur 24 est arrêté dès lors que la quantité de mouture nécessaire pour effectuer le cycle d'infusion commandé a été distribuée.

Le curseur 35 effectue ainsi un mouvement de va-et-vient, comme indiqué par la double flèche II à la figure 4, ce mouvement étant imprimé au bras d'essuyage 21 qui réalise ainsi un balayage de la goulotte 19 dans le sens de sa largeur pendant toute la durée du fonctionnement du moto-réducteur 24 et donc pendant toute la période de distribution de café dans la goulotte 19. Ceci permet d'une part d'éviter les bourrages dans la goulotte lors du passage de la mouture de café vers la chambre d'infusion et, d'autre part, de maintenir la goulotte toujours propre.

Après l'arrivée de la mouture dans la chambre d'infusion, le piston presseur descend dans la chambre et comprime la mouture qui est ensuite traversée par l'eau chaude d'infusion en provenance du bloc thermique. La boisson ressort ensuite par les buses 5, le piston remonte en sa position initiale, la galette de marc usagée est expulsée à l'intérieur du bac 9 et la machine est prête pour recommencer un nouveau cycle d'infusion.

D'autres variantes et modes de réalisation de l'invention peuvent être envisagés sans sortir du cadre de ses revendications.

Ainsi, un même dispositif de nettoyage automatique de la goulotte pourrait être utilisé avec une machine à café utilisant un broyeur de grains de café à la place du réservoir de café moulu.

On pourrait utiliser, dans une variante, une came comportant un nombre différent de nervures uniformément réparties. Dans une autre variante, on pourrait envisager un nombre inférieur de nervures, par exemple une seule nervure portée par la came, mais agencée de manière à ce que le bras d'essuyage effectue un balayage uniquement à la fin du cycle de distribution de mouture dans la goulotte (par exemple en utilisant de plus des moyens de remise en position initiale de la came à chaque nouveau cycle d'infusion). Dans encore une autre variante, on pourrait utiliser un dispositif de nettoyage dissocié du distributeur de mouture pour effectuer un balayage de contrôle immédiatement après le passage du café dans la goulotte et de préférence avant l'ouverture de la chambre d'infusion.

Par ailleurs, le bras d'essuyage pourrait être réalisé sous forme d'une lamelle souple avec une partie active en élastomère reliée à une partie métallique de fixation au curseur.

On pourrait utiliser, dans une variante, plusieurs bras d'essuyage actionnés en translation ou en pivotement, dans le sens de la largeur de la goulotte ou celui de sa longueur.

## Revendications

1. Distributeur automatique de boissons infusées à partir de produit pulvérulent comprenant :
- une chambre d'infusion,
- un dispositif distributeur (10) de produit pulvérulent comportant un orifice (18) de distribution communiquant avec une goulotte (19) apte à canaliser ledit produit vers la chambre d'infusion,
- un dispositif de nettoyage automatique (20) de la goulotte (19),
le dispositif de nettoyage automatique (20) comprenant un bras d'essuyage (21) disposé à l'intérieur de la goulotte (19) et actionné par un mécanisme (25,27) à entraînement électrique,
ledit mécanisme comprenant un moteur électrique (27) et un dispositif d'entraînement (25) apte à transformer le mouvement rotatif de l'arbre de sortie du moteur en un mouvement alternatif du bras d'essuyage (21),
**caractérisé en ce que** ledit moteur électrique (27) appartient au dispositif distributeur (10) de produit pulvérulent.

2. Distributeur selon la revendication 1, **caractérisé en ce que** le dispositif d'entraînement (25) comprend une came (30) entraînée en rotation par le moteur électrique (27) via un train d'engrenages (28).

3. Distributeur selon la revendication 2, **caractérisé en ce que** la came (30) entraîne le bras d'essuyage (21) en un mouvement alternatif au contact d'au moins une paroi de la goulotte (19).

4. Distributeur selon l'une des revendications 1 à 3, **caractérisé en ce que** le bras d'essuyage (21) effectue au moins un aller-retour, de préférence trois allers-retours, durant la période de distribution de produit pulvérulent.

5. Distributeur selon l'une des revendications 2 à 4, **caractérisé en ce que** la came (30) tourne autour d'un axe vertical (A).

6. Distributeur selon l'une des revendications 2 à 5, **caractérisé en ce que** la came (30) actionne un interrupteur de commande du dispositif distributeur (10) de produit pulvérulent.

7. Distributeur selon l'une des revendications 2 à 6, **caractérisé en ce que** ledit dispositif distributeur (10) comprend un réservoir (14) de café moulu à doseur muni de pales et que la came (30) comporte des moyens d'entraînement en rotation des pales du doseur.

8. Distributeur selon l'une des revendications 2 à 7, **caractérisé en ce que** le bras d'essuyage (21) est fixé à un curseur (35) guidé en translation dans un plan perpendiculaire à l'axe de rotation de la came (30).

9. Distributeur selon la revendication 8, **caractérisé en ce que** ledit curseur (35) est monté dans un logement (38) moyennant un ressort de rappel, la force du ressort étant contraire à celle imprimée au curseur (35) par la came (30).

10. Distributeur selon lune des revendications 8 ou 9, **caractérisé en ce que** la goulotte (19) est inclinée par rapport au plan du curseur (35) et que le bras d'essuyage (21) suit l'inclinaison de la goulotte.

11. Distributeur selon l'une des revendications précédentes, **caractérisé en ce que** le bras d'essuyage (21) effectue un mouvement de translation dans le sens de la largeur de la goulotte (19).

12. Distributeur selon l'une des revendications précédentes, **caractérisé en ce que** le bras d'essuyage (21) est disposé près de l'orifice (18) de distribution et que l'amplitude du mouvement effectué par le bras d'essuyage (21) est sensiblement égale à la largeur de l'orifice (18) de distribution.

13. Distributeur selon l'une des revendications précédentes, **caractérisé en ce que** ledit bras d'essuyage (21) est réalisé en un fil d'acier inoxydable.

14. Distributeur selon l'une des revendications 3 à 13, **caractérisé en ce que** ledit bras d'essuyage (21) prend appui de manière élastique contre la paroi (22) de la goulotte.

15. Distributeur selon l'une des revendications précédentes, **caractérisé en ce que** ledit dispositif distributeur (10) comprend un réservoir de produit pulvérulent monté amovible dans un support (45) muni d'une ouverture (48) de passage du produit pulvérulent vers la goulotte (19).

16. Distributeur selon la revendication 15, **caractérisé en ce que** la paroi de fond (46) du support (45) comporte une fente (50) d'évacuation de produit pulvérulent en direction de la goulotte (19).

## Patentansprüche

1. Automat für aus einer pulverförmigen Substanz zubereitete Aufgussgetränke, bestehend aus:
- einer Aufbrühkammer,
- einer Spendervorrichtung (10) für die pulverförmige Substanz, die eine Ausgabeöffnung (18) enthält, die mit einem Einfüllstutzen (19) verbunden ist, der diese Substanz zur Aufbrühkammer leiten kann,
- einer automatischen Reinigungsvorrichtung (20) für den Einfüllstutzen (19),
wobei die automatische Reinigungsvorrichtung (20) einen Wischarm (21) im Inneren des Einfüllstutzens (19) enthält, der durch einen elektrischen Antriebsmechanismus (25, 27) betätigt wird; dieser Mechanismus besteht aus einem Elektromotor (27) und einer Antriebsvorrichtung (25), welche die Drehbewegung der Welle am Motorausgang in eine Hin-und-her-Bewegung des Wischarms (21) umwandeln kann, wobei dieser Elektromotor (27) zur Spendervorrichtung (10) für die pulverförmige Substanz gehört.

2. Spender nach Anspruch 1, **dadurch gekennzeichnet, dass** die Antriebsvorrichtung (25) eine Kurvenscheibe (30) enthält, die durch den Elektromotor (27) über ein Zahnräderwerk (28) in Drehung versetzt wird.

3. Spender nach Anspruch 2, **dadurch gekennzeichnet, dass** die Kurvenscheibe (30) den Wischarm (21) beim Kontakt mit mindestens einer Wand des Einfüllstützens (19) in einer Hin-und-her-Bewegung antreibt.

4. Spender nach einem der Ansprüche 1 bis 3, **dadurch gekennzeichnet, dass** der Wischarm (21) mindestens eine und vorzugsweise drei Hin-und-her-Bewegungen während des Zeitraums der Ausgabe der pulverförmigen Substanz ausführt.

5. Spender nach einem der Ansprüche 2 bis 4, **dadurch gekennzeichnet, dass** sich die Kurvenscheibe (30) um eine senkrechte Achse (A) dreht.

6. Spender nach einem der Ansprüche 2 bis 5, **dadurch gekennzeichnet, dass** die Kurvenscheibe (30) einen Steuerschalter der Spendervorrichtung (10) für die pulverförmigen Substanz betätigt.

7. Spender nach einem der Ansprüche 2 bis 6, **dadurch gekennzeichnet, dass** die Spendervorrichtung (10) einen Behälter (14) mit Kaffeemehl mit einem Schaufeldosierer enthält und dass die Kurvenscheibe (30) Vorrichtungen für den Drehantrieb der Schaufeln des Dosierers trägt.

8. Spender nach einem der Ansprüche 2 bis 7, **dadurch gekennzeichnet, dass** der Wischarm (21) an einem Schieber (35) befestigt ist, der senkrecht zur Drehachse der Kurvenscheibe (30) verschiebbar geführt ist.

9. Spender nach Anspruch 8, **dadurch gekennzeichnet, dass** der Schieber (35) über eine Rückholfeder in einer Aufnahme (38) montiert ist, wobei die Federkraft der Kraft, die durch die Kurvenscheibe (30) auf den Schieber (35) ausgeübt wird, entgegengesetzt ist.

10. Spender nach einem der Ansprüche 8 oder 9, **dadurch gekennzeichnet, dass** der Einfüllstutzen (19) zur Ebene des Schiebers (35) geneigt ist und dass der Wischarm (21) der Neigung des Einfüllstutzens folgt.

11. Spender nach einem der vorhergehenden Ansprüche, **dadurch gekennzeichnet, dass** der Wischarm (21) eine Schiebebewegung in Richtung der Breite des Einfüllstutzens (19) ausführt.

12. Spender nach einem der vorhergehenden Ansprüche, **dadurch gekennzeichnet, dass** sich der Wischarm (21) in der Nähe der Ausgabeöffnung (18) befindet und dass die Weite der Bewegung des Wischarms (21) im Wesentlichen gleich der Breite der Ausgabeöffnung (18) ist.

13. Spender nach einem der vorhergehenden Ansprüche, **dadurch gekennzeichnet, dass** der Wischarm (21) aus Edelstahldraht gefertigt ist.

14. Spender nach einem der Ansprüche 3 bis 13, **dadurch gekennzeichnet, dass** der Wischarm (21) elastisch auf der Wand (22) des Einfüllstutzens aufliegt.

15. Spender nach einem der vorhergehenden Ansprüche, **dadurch gekennzeichnet, dass** die Spendervorrichtung (10) einen Behälter mit der pulverförmigen Substanz enthält, der abnehmbar in einem Halter (45) montiert ist, der eine Öffnung (48) für den Durchlass der pulverförmigen Substanz zum Einfüllstützen (19) aufweist.

16. Spender nach Anspruch 15, **dadurch gekennzeichnet, dass** die Bodenwand (46) des Halters (45) einen Schlitz (50) für die Abführung der pulverförmigen Substanz zum Einfüllstutzen (19) enthält.

## Claims

1. Automatic dispenser of beverages infused from powdered product comprising:
- an infusion chamber,
- a powdered product dispensing device (10) comprising a dispensing port (18) communicating with a chute (19) capable of channelling said product to the infusion chamber,
- a device (20) for automatic cleaning of the chute (19),
the automatic cleaning device (20) comprising a wiper arm (21) arranged inside the chute (19) and actuated by an electrically driven mechanism (25, 27), said mechanism comprising an electric motor (27) and a drive system (25) capable of converting the rotating movement of the motor output shaft into a reciprocating movement of the wiper arm (21), **characterised in that** said electric motor (27) is part of the powered product dispensing device (10).

2. Dispenser according to claim 1, **characterised in that** the drive system (25) comprises a cam (30) driven in rotation by the electric motor (27) via a gear train (28).

3. Dispenser according to claim 2, **characterised in that** the cam (30) drives the wiper arm (21) with a reciprocating movement in contact with at least one wall of the chute (19).

4. Dispenser according to one of claims 1 to 3, **characterised in that** the wiper arm (21) performs at least one back and forth movement, preferably three back and forth movements, during the period when the powdered product is being dispensed.

5. Dispenser according to one of claims 2 to 4, **characterised in that** the cam (30) rotates around a vertical shaft (A).

6. Dispenser according to one of claims 2 to 5, **characterised in that** the cam (30) actuates a control switch of the powdered product dispensing device (10).

7. Dispenser according to one of claims 2 to 6, **characterised in that** said dispensing device (10) comprises a ground coffee container (14) with doser equipped with blades and **in that** the cam (30) comprises means for rotating the doser blades.

8. Dispenser according to one of claims 2 to 7, **characterised in that** the wiper arm (21) is attached to a cursor (35) guided in translation in a plane perpendicular to the axis of rotation of the cam (30).

9. Dispenser according to claim 8, **characterised in that** said cursor (35) is fitted in a housing (38) with a return spring, the spring force acting in the direction opposite to that exerted on the cursor (35) by the cam (30).

10. Dispenser according to claim 8 or 9, **characterised in that** the chute (19) is inclined with respect to the plane of the cursor (35) and **in that** the wiper arm (21) follows the inclination of the chute.

11. Dispenser according to one of the preceding claims, **characterised in that** the wiper arm (21) performs a translation movement across the width of the chute (19).

12. Dispenser according to one of the preceding claims, **characterised in that** the wiper arm (21) is arranged near the dispensing port (18) and **in that** the amplitude of the movement performed by the wiper arm (21) is substantially equal to the width of the dispensing port (18).

13. Dispenser according to one of the preceding claims, **characterised in that** said wiper arm (21) is made from stainless steel wire.

14. Dispenser according to one of claims 3 to 13, **characterised in that** said wiper arm (21) rests elastically against the chute wall (22).

15. Dispenser according to one of the preceding claims, **characterised in that** said dispensing device (10) comprises a powdered product container mounted removably in a support (45) equipped with an opening (48) for feeding the powdered product towards the chute (19).

16. Dispenser according to claim 15, **characterised in that** the bottom wall (46) of the support (45) comprises a slot (50) for evacuating powdered products towards the chute (19).
